Europäisches Patentamt

European Patent Office

Office européen des brevets

(19)

(11) Veröffentlichungsnummer: **0 199 926**
**B1**

(12) **EUROPÄISCHE PATENTSCHRIFT**

(45) Veröffentlichungstag der Patentschrift: 03.10.90

(21) Anmeldenummer: **86102427.1**

(22) Anmeldetag: **25.02.86**

(51) Int. Cl.⁵: **A 01 C 7/04, A 01 C 5/06**

(54) Sämaschine.

(30) Priorität: **28.02.85 US 707043**

(43) Veröffentlichungstag der Anmeldung:
**05.11.86 Patentblatt 86/45**

(45) Bekanntmachung des Hinweises auf die
Patenterteilung:
**03.10.90 Patentblatt 90/40**

(84) Benannte Vertragsstaaten:
**DE FR GB**

(56) Entgegenhaltungen:
**DE-B-1 102 465**
**FR-A- 941 301**
**FR-A- 981 619**
**US-A-3 680 737**
**US-A-4 009 668**

(73) Patentinhaber: **DEERE & COMPANY**
**1 John Deere Road**
**Moline, Illinois 61265 (US)**

(72) Erfinder: **Olson, Jay Harold**
**1716 - 29th Street**
**Rock Island Illinois 61201 (US)**

(74) Vertreter: **Feldmann, Bernhard et al**
**DEERE & COMPANY European Office, Patent**
**Department Steubenstrasse 36-42 Postfach 503**
**D-6800 Mannheim 1 (DE)**

Courier Press, Leamington Spa, England.

**Beschreibung**

Die Erfindung bezieht sich auf eine Sämaschine, insbesondere Einzelkornsämaschine, mit einer in einem Gehäuse angeordneten Austragvorrichtung, an der ein Austragrohr angeschlossen ist, das ein oberes Ende und ein unteres Ende und eine diese beiden Enden miteinander verbindende, eine Vorderwand bildende innere Oberfläche aufweist, die zumindest in ihrem unteren dem Boden zugelegenen Bereich mit Bezug auf die Fahrtrichtung der Sämaschine nach hinten derart gekrümmt verläuft, daß ihre Krümmung fortschreitend bodenwärts zunimmt.

Bei dieser bekannten Sämaschine (US—A—3 680 737) wird jedes einzelne Saatgut über unter Unterdruck stehende Finger angesaugt und in das Austragrohr geblasen. Dieses ist so breit ausgebildet, daß es im freien Fall auf die Vorderwand in deren unteren Vierteil aufschlägt, dort hochspringt, seine Lage verändert und wieder auf die Vorderwand zurückfällt und in einer unkontrollierten Weise in die vorhergezogene Furche gelangt. Je nachdem, welche Energie dem Saatkorn dann noch innewohnt, kann es zu einem weiteren Springen kommen, so daß die Saatkornabstände in der Furche unterschiedlich sind, was ebenfalls unerwünscht ist.

Die mit der Erfindung zu lösende Aufgabe wird demgegenüber darin gesehen, das Austragrohr der Sämaschine derart auszubiden, daß zumindest im Austrittsbereich des Austragrohres ein Springen vermieden wird so daß die einzelnen Saatkörner nich in den Furchen aufspringen, sondern gleichmaßig in die Furche abgelegt werden und dort liegendbleiben. Diese Aufgabe ist nach der Erfindung dadurch gelöst, daß die Krümmung in einem sich an das obere Ende anschließenden ersten Teil einer logarithmischen Kurve und in einem zweiten Teil, der sich an den ersten Teil anschließt und bis zum unteren Ende führt, einer Exponentialkurve folgt. Durch diese besondere doppelkurvige Ausbildung der Vorderwand des Austragrohres wird jedem in das Austragrohr fallenden Saatkorn auf seinem Weg zur Furche das Hin- und Herspringen genommen, so daß es im unteren Bereich des Austragrohres auf dessen Vorderwand zu liegen kommt, von dort bis zu dem unteren Ende auf der Vorderwand rutscht und gleichmaßig in die Furche abgelegt wird.

Damit der erste Aufschlagwinkel klein gehalten werden kann, wird nach der Erfindung ferner vorgeschlagen, daß der erste Teil in seinem sich an das obere Ende anschließenden Bereich im wesentlichen geradlinig ausgebildet ist.

Im folgenden wird die Erfindung anhand von lediglich einen Ausführungsweg darstellenden Zeichnungen näher erläutert. Es zeigt:

Fig. 1 eine perspektivische Darstellung einer Sämaschine, insbesondere einer Einzelkornsämaschine, mit einem Sammelbehälter für Saatgut und einem für Kunstdünger sowie einer Sävorrichtung,

Fig. 2 eine perspektivische Darstellung der Sävorrichtung in der Ansicht von unten,

Fig. 3 eine Frontansicht der Sävorrichtung, wobei Teile der Seitenwand weggelassen sind, um das Särad und das in der Sävorrichtung angesammelte Saatgut besser darzustellen,

Fig. 4 eine Schnittdarstellung entlang der Linie 4—4 gemäß Fig. 3,

Fig. 5 eine Draufsicht eines Teils des äußeren Bereiches des Särades der Sävorrichtung gemäß Fig. 1 bis 4,

Fig. 6 eine Ansicht des Austragrohres der Sävorrichtung in den Ansicht von links,

Fig. 7 eine Frontansicht des Austragrohres gemäß Fig. 1,

Fig. 8 eine Draufsicht des Austragrohres gemäß Fig. 1,

Fig. 9 eine Rückansicht des unteren Teils des Austragrohres gemäß Fig. 1,

Fig. 10 eine Schnittdarstellung entlang der Linie 10—10 gemäß Fig. 6,

Fig. 11 eine Schnittdarstellung des Austragrohres und eines Teiles des Särades,

Fig. 12 eine Schnittdarstellung entlang der Linie 12—12 gemäß Fig. 6 und 8.

In der Zeichnung ist mit 10 eine Sämaschine bezeichnet, die an einem Hauptrahmen 12 anschließbar ist, der mit einem in der Zeichnung nicht dargstellten Schlepper verbindbar ist, der sich in Richtung gemäß Pfeil 14 bewegt. An dem Hauptrahmen 12 sind zahlreiche Sävorrichtungen 16 angeschlossen, die nebeneinander parallel verlaufend angeordnet sind.

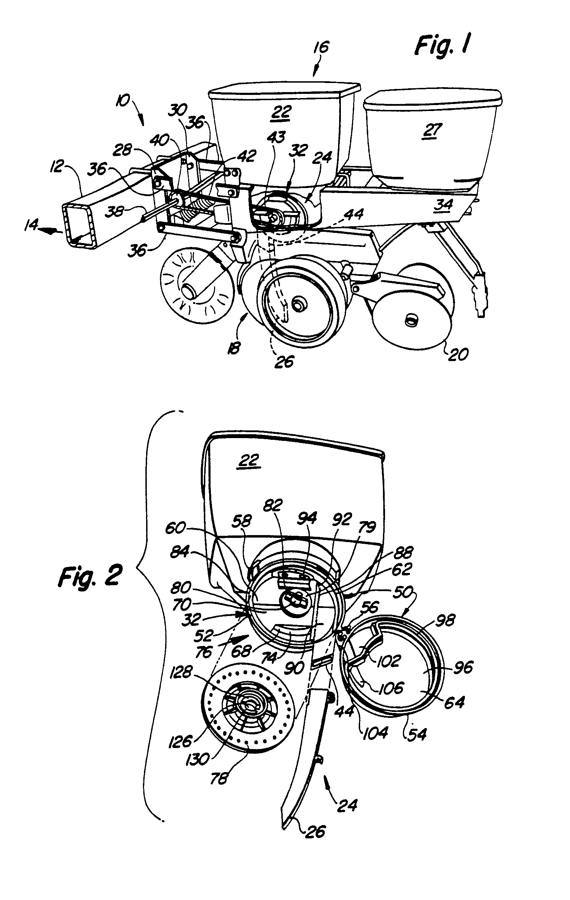

Jede Sävorrichtung 16 weist einen Furchenöffner 18 sowie Zustreichräder 20 und einen Saatgutbehälter 22 auf. Bewegt sich der Schlepper gemäß Pfeilrichtung 14 auf dem Feld, so bilden die Furchenöffner 18 je eine Furche im Boden. Das Saatgut aus dem Saatgutbehälter fließt dann in eine Austragvorrichtung 24, die in Fig. 2 näher veranschaulicht ist und die Teil der Sävorrichtung 16 ist. Die Austragvorrichtung 24 leitet die einzelnen Saatkörner über ein Austragrohr 26 (siehe gestrichelte Darstellung gemäß Fig. 1) in die gebildete Furche, wobei die Austraggeschwindigkeit des Saatgutes durch die Geschwindigkeit der Sämaschine bestimmt wird, mit der sie über das Feld gezogen wird. Mit Bezug auf die Fahrtrichtung liegen hinter dem Austragrohr 26 die Zustreichräder 20, die die Furchen schließen und mit Erdreich abdecken, nachdem das Saatgut über die Austragvorrichtung 24 in die Furche abgelegt worden ist.

Am Ende der Sävorrichtung 16 ist ein Behälter 27 zur Aufnahme von Düngemittel angeordnet. Der Behälter 27 zur Aufnahme des Düngemittels ist mit entsprechenden Einrichtungen ausgestattet, so daß das Düngemittel in der gewünschten Menge zusammen mit dem Saatgut in den Boden abgegeben werden kann.

Wie aus Fig. 1 hervorgeht, ist die Sävorrichtung 16 mittels Halterungen 28 und 30 an die Rückseite des Hauptrahmens 12 lösbar angeschlossen, wobei die einzelnen Halterungen sich in vertikaler Richtung erstrecken. Der Saatgutbehälter 22 sowie die Austragvorrichtung 24 sind in einem Raumen 34 aufgenommen, der über zahlreiche parallel verlaufende Lenker 36 an die einzelnen Halterungen 28 und 30 vertikal schwenkbar angeschlossen ist, so daß sie Sävorrichtung ohne weiteres der Bodenkontur folgen kann, wenn sich die Sämaschine über den Boden bewegt. Wie aus Fig. 1 hervorgeht, ist die linke Seite über zwei Parallelogrammlenker an die Halterung 28 und die rechte Seite über zwei Parallelogrammlenker an die Halterung 30 angeschlossen.

Eine Welle 38 lagert ebenfalls an der Rückseite des Hauptrahmens 12 und weist ein erstes Kettenrad 40 auf, das zwischen den Halterungen 28 und 30 liegt. Das Kettenrad 40 ist über eine Kette 42 mit einem zweiten Kettenrad 43 (siehe gestrichelte Linien) verbunden, das unterhalb des Saatgutbehälters 22 an einer Seite der Austragvorrichtung 24 vorgehsehen ist. Das zweite Kettenrad 43 steht mit einer Säscheibe 78 in Antriebsverbindung, die innerhalb der Austragvorrichtung 24 angeordnet ist und dazu dient, die einzelnen Saatkörner dem Austragrohr 26 zuzuführen.

Mit der Welle 38 ist ebenfalls ein Antriebsrad verbunden, das im ständigen Kontakt mit dem Boden steht und die Welle 38 proportional antreibt, wenn die Sämaschine 10 über den Boden gezogen wird. Da die Welle 38 über das erste Kettenrad 40 und die Kette 42 mit dem zweiten Kettenrad 43 antriebsverbunden ist, wird die Austraggeschwindigkeit des Saatgutes aus der Austragvorrichtung 24 mit der Geschwindigkeit der Sämaschine 10 koordiniert.

Wie aus Fig. 1 hervorgeht, befindet sich der Furcheuöffues 18 vorce au der Sävorrichtung 16 und bildet die einzelnen Furchen, in die die Saatkörner mittels der Austragvorrichtung 24 und des Austragrohres 26 einzeln abgelegt werden. Die Zustreichräder 20 au Ende der Sävorrichtung 16 gewährleisten, daß der Boden von zwei Seiten in die Furche bewegt wird, um das Saatgut entsprechend abzudecken.

In Fig. 2 ist die Austragvorrichtung 24 im Detail veranschaulicht. Mit Ausnahme des Austragrohres 26 und einer Austragschute 44 ist die Austragvorrichtung 24 im einzelnen in der Anmeldung EP—A2—0 140 701 offenbart.

Die Austragvorrichtung 24 ist mit einem in etwa zylinderförmig ausgebildeten Gehäuse 50 ausgestattet, das aus einer ersten Gehäusehälfte 52 und aus einer zweiten Gehäusehälfte 54 besteht, die in etwa einander identisch sind und über eine Gelenkvorrichtung 56 miteinander gelenkig verbunden sind. Eine Verriegelungsvorrichtung 58 ist gegenüberliegend an der ersten und zweiten Gehäusehälfte 52 und 54 diametral gegenüber der Gelenkvorrichtung 56 angeordnet und sichert die beiden Gehäusehälften 52 und 54, wenn diese aus der Stellung gemäß Fig. 2 in eine Stellung gemäß Fig. 1 verschwenkt worden sind.

Die erste Gehäusehälfte 52 weist eine tellerförmige Rückwand 60 auf, an die sich eine zylinderförmige Seitenwand 62 anschließt. Die zweite Gehäusehälfte 54 besteht ebenfalls aus einer tellerförmigen Rückwand 64, an die im Bereich der Peripherie eine zylindrische Seitenwand 66 angeschlossen ist. Die erste Gehäusehälfte 52 ist an den Boden des Saatgutbehälters 22 angeschlossen, so daß das Saatgut aus dem Sammelbehälter 22 infolge seiner Schwerkraft in eine Schute 68 gelangen kann, die am hinteren Teil der ersten Gehäusehälfte 52 vorgesehen ist. Eine Zwischenwand 70, die eben ausgebildet ist, schließt sich als Fortsetzung an die Rückwand 60 an und bildet mit einer weiteren gegenüberliegenden, parallel verlaufenden Wand 72 einen Teil der Austragschute 68 für die erste Gehäusehälfte 52. Die Zwischenwand 70 bildet ferner auch eine Öffnung 74 im Boden der ersten Gehäusehälfte 52, so daß die Schute 68 mit einem Sammelbehälter 76 innerhalb der ersten Gehäusehälfte 52 in Verbindung steht. Mittels der Zwischenwand 70 und der Öffnung 74 wird der Ausfluß der Saatgutmenge im Sammelbehälter 76 bestimmt.

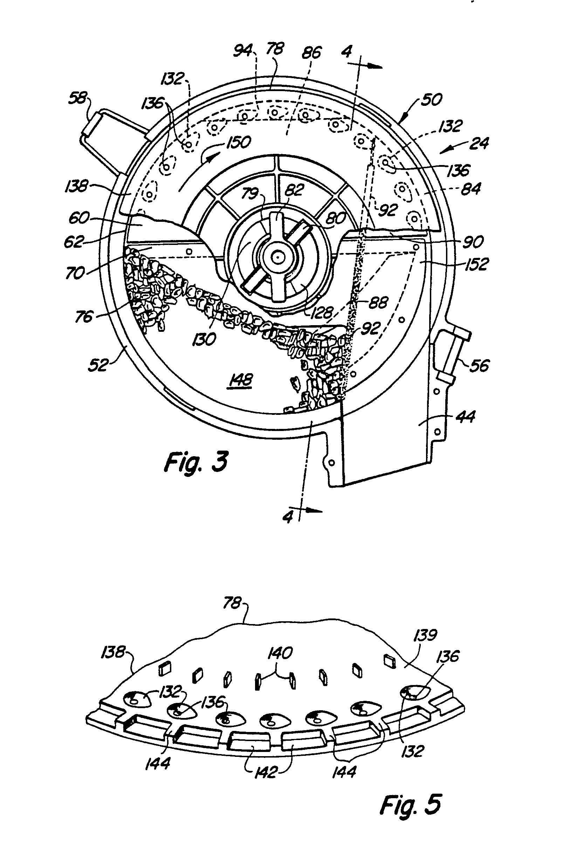

Der Sammelbehälter 76 befindet sich zwischen der Zwischenwand 70 und der Säscheibe 78, wenn diese im Gehäuse 50 der ersten und zweiten Gehäusehälfte 52 und 54 angeordnet ist. Infolge der Schwerkraft des Saatgutes fließt das Saatgut aus dem Saatgutbehälter 22 nach unten in die Schute 68 an der Rückseite der ersten Gehäusehälfte 52. Über die Schute 68 fließt das Erntegut durch die Öffnung 74 in den Sammelbehälter 76 (siehe Fig. 3).

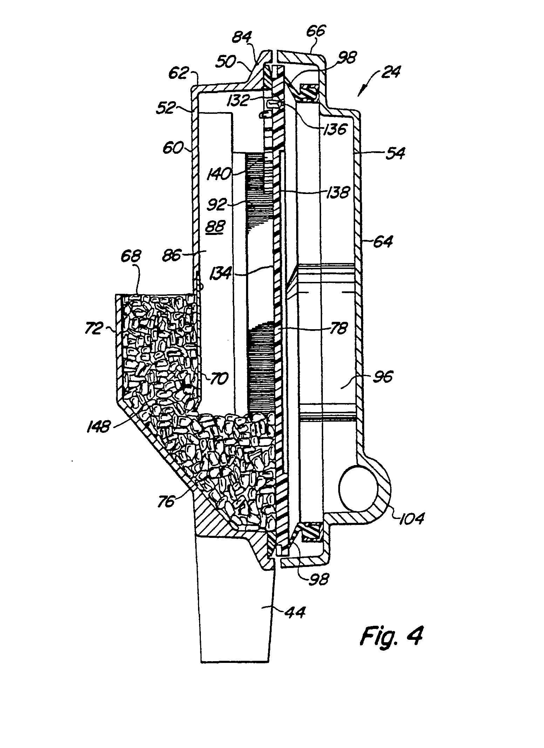

Die Säscheibe 78 ist lösbar und drehbar in dem zylindrischen Gehäuse 50 mittels einer Welle und Nabe 79 koaxial in der ersten Gehäusehälfte 52 gelagert. Der Nabe und Welche 79 ist ferner eine Arretierungsvorrichtung 80 mit einem Griffteil 82 zugeordnet. Ist die Säscheibe 78 auf der Welle und Nabe 79 montiert, so erstreckt sich die äußere Peripherie der Säscheibe 78 bis in die Nähe eines Ringteiles 84, der auf der zylinderförmige verlaufenden Seitenwand 62 der ersten Gehäusehälfte 52 angeordnet ist. Hierdurch schließt die Säscheibe 78 den Innenraum der ersten Gehäusehälfte 52 im wesentlichen ab und bildet eine erste Saatgutkammer 86, zu der der Sammelbehälter 76 im Bereich des Bodens des Gehäuses gehört (siehe Fig. 3 und 4).

Eine Trennwand 88 erstreckt sich quer durch das Innere der Gehäusehälfte 52 zwischen den gegenüberliegenden Teilen der zylinderförmigen Seitenwand 62 und bildet eine abgetrennte Austragkammer 90 in der Saatgutkammer 86 (die Saatgutkammer ist im Detail in der EP—A2—0 140 701 beschrieben). Das im Sammelbehälter 76 befindliche Saatgut wird im Bereich des Bodens der ersten Gehäusehälfte 52 von der Säscheibe 78 aufgenommen, die nach dem Saugluft- bzw. Vakuumprinzip arbeitet, so daß die einzelnen Saatkörner in Saatgutzellen 132 der Säscheibe 78 aufgenommen und dort festgehalten werden. Die einzelnen Saatkörner bleiben so lange in den Saatgutzellen 132 der Säscheibe 78, bis sie in die Austragkammer 90 gelangen, die von dem Unterdruckbereich der zweiten Gehäusehälfte getrennt ist. Durch Wegfall des Druckes fallen die einzelnen Saatkörner durch die Austragschute 44 und das Austragrohr 26 auf den darunter befindlichen Boden und die dort gebildete Furche. Die Austragschute 44 ist mit einer im Boden des Gehäuses 50 vorgesehenen Öffnung mit der ersten Gehäusehälfte 52 verbunden und steht somit mit der Austragkammer 90 in Verbindung. Eine Abstreifbürste 92 bildet zusammen mit der Trennwand 88 eine vollständige Abtrennung zwischen der Rückwand 60 und der Säscheibe 78 und gestattet zur gleichen Zeit das Passieren von auf der Oberfläche der Säscheibe 78 vorgesehenen Rippen bzw. Leitelementen.

Eine Lufteinlaßöffnung 94 ist in der Rückwand 60 der ersten Gehäusehälfte 52 im oberen Bereich vorgesehen und gestattet den Eintritt der Luft in die Saatgutkammer 86 innerhalb der ersten Gehäusehälfte 52. Ein kleiner Betrag der eintretenden Luft bewirkt, daß in der Saatgutkammer 86 Atmosphärendruck herrscht, so daß der verminderte Druck in der zweiten Gehäusehälfte 54 sicherstellt, daß die Saatkörner in der Saatgutzellen 132 der Säscheibe 78 bleiben.

Die zweite Gehäusehälfte 54 weist eine zweite Kammer bzw. eine Vakuumkammer 96 auf, die durch die Rückwand 64 in Verbindung mit einem Vakuumdichtelement 98 gebildet wird, das auf der Innenseite der zylindrisch ausgebildeten Seitenwand der zweiten Gehäusehälfte 54 angeordnet ist und mit einer Dichtlippe gegen die Rückseite der Säscheibe 78 anliegt. In einem Teil der zweiten Gehäusehälfte 54 im Bereich der Gelenkverbindung 56 verläuft das Vakuumdichtelement 98 derart quer durch die zweite Gehäusehälfte 54, daß es eine vakuumfreie Kammer 102 innerhalb der zweiten Gehäusehälfte 54 nebeu der zweiten Vakuumkammer 96 bildet. Eine Vakuumöffnung 104 in der Rückwand 64 der zweiten Gehäusehälfte 54 steht mit einer Öffnung 106 in Verbindung, die wiederum mit der zweiten Vakuumkammer 96 innerhalb der zweiten Gehäusehälfte 54 in Verbindung steht.

Die Vakuumöffnung 104 ist mit einer Anschlußleitung eines Gebläses verbunden, das in der Zeichnung nicht näher dargestellt ist. Hierdurch wird über die Vakuumöffnung 104 und die Öffnung 106 in der Vakuumkammer 96 der Druck herabgesetzt. Der in der Vakuumkammer 96 erzeugte Unterdruck wirkt sich auf den größeren Teil der Säscheibe 78 aus. Der Anteil der Säscheibe 78, der dem verminderten Druck nicht ausgesetzt ist, ist der Teil, der sich in die Austragkammer 90 innerhalb der zweiten Gehäusehälfte und der vakuumfreien Kammer 102 der zweiten Gehäusehälfte 54 erstreckt. Die spezielle Ausbildung des Vakuumdichtelementes 98 verhindert, daß ein Ausgleich zwischen dem reduzierten Druck in der Vakuumkammer 96 und dem Atmosphärendruck in der vakuumfreien Kammer 102 eintritt. Da im Bereich der vakuumfreien Kammer 102 Normaldruck bzw. Atmosphärendruck herrscht, wird sichergestellt, daß die einzelnen Saatkörner auf der Säscheibe 78 in die Austragkammer 90 geleitet werden.

Wie aus Fig. 2 hervorgeht, ist im mittleren Bereich der Säscheibe 78 ein länglicher Schlitz 126 in zwei seitlich hervorstehenden, halbkreisförmig ausgebildeten Kragen 128 und 130 mit ansteigender Höhe vorgesehen. Der Griffteil 82 ist ebenfalls ähnlich wie der Schitz länglich ausgebildet, so daß er in den Schlitz 126 der Säscheibe 78 eingesetzt werden kann, wenn die Säscheibe auf der Nahe 79 montiert wird. Nach der Montage der Säscheibe 78 wird der Griffteil 82 auf die Welle aufgedreht und lehnt sich dabei gegen die Kragen 128, 130 an, so daß die Säscheibe 78 auf der Nabe 79 in der gewünschten Stellung festgesetzt wird.

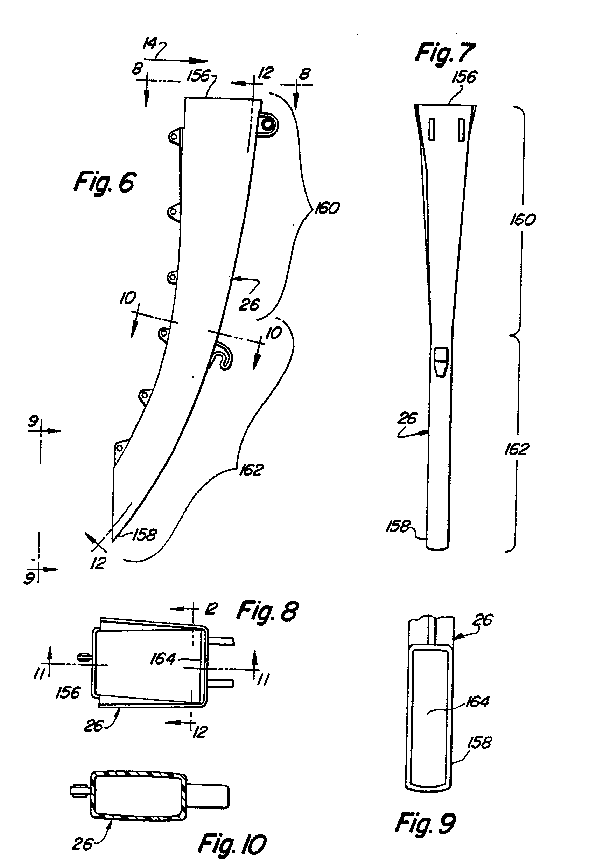

Fig. 5 zeigt einen Teil der Säscheibe 78 mit den zahlreichen im Kreisumfang angeordneten Saatgutzellen 132. Eine jede Saatgutzelle 132 weist am Boden eine Öffnung 136 auf, die sich durch die Säscheibe 78 in Richtung der Oberfläche 138 der Säscheibe 78 erstreckt, so daß die an der Oberfläche 134 vorgesehene Saatgutzelle 132 über die Öffnung 136 mit der Vakuumkammer 96 in der zweiten Gehäusehälfte 54 in Verbindung steht.

Die Säscheibe 78 ist ferner mit zahlreichen Vorsprüngen bzw. Rippen 140 ausgerüstet, die sich von der Oberfläche 134 im Bereich der Saatgutzellen 132 axial nach außen erstrecken. Die Rippen 140 unterstützen die Bewegung der Saatgutkörner in der Saatgutmasse innerhalb des Sammelbehälters 76, so daß diese entsprechend beschleunigt werden und leichter von den Saatugzellen 132 aufgenommen werden können.

Die äußere Kante der Säscheibe 78 ist mit rechteckförmigen Aussparungen 142 versehen, die durch sich radial erstrekkende Rippen 144 unterteilt sind. Die Aussparungen 142 und die Rippen 144 sind besonders vorteilhaft, weil hierdurch die in dem Saatgut enthaltenen Verunreinigungen nach außen hin abgegeben werden können. Hierzu bildet der Peripheriebereich der Säscheibe 78 mit einem Teil des Gehäuses 50 einen Ringspalt zum Ausstoß der Verunreinigungen.

Durch Vorwärtsbewegung der Sämaschine 10 gemäß Pfeil 14 wird die Welle 38 über das Kettenrad 40 entsprechend angetrieben. Die mit dem Kettenrad 40 verbundene Kette 42 treibt ein weiteres Kettenrad 43 an, das wiederum die Säscheibe 78 in dem Gehäuse 50 der Austragvorrichtung 24 antreibt. Wie aus den Figuren 3 und 4 hervorgeht, sind die auf der Oberfläche 134 der Säscheibe 78 angeordneten Saatgutzellen 132 so ausgerichtet, daß sie sich in den Sammelbehälter 76 und in die Austragkammer 90 erstrecken, wenn die Säscheibe 78 auf der Nabe 79 innerhalb des Gehäuses 50 der Austragvorrichtung 24 angeordnet ist. Zur gleichen Zeit liegt die gegenüberliegenden Oberfläche 138 der Säscheibe 78 im Bereich der Vakuumkammer 96, in der ein geringerer Druck reicht. Jedoch ein Teil der Oberfläche 138 erstreckt sich auf in die vakuumfreie Kammer 102 gegenüber der Austragkammer 90. Der verminderte Druck in der Vakuumkammer 96 steht mit den Saatgutzellen 132 auf der gegenüberliegenden Oberfläche 134 der Säscheibe 78 in Verbindung, und zwar über die Öffnungen 136.

Wie bereits erwähnt, gelangt das Saatgut aus dem Saatgutbehälter 22 über die Schute 68 in den Sammelbehälter 76. Hierdurch wird eine Saatgutmasse 148 innerhalb des Sammelbehälters 76 angesammelt (siehe Fig. 3 und 4). Wird die Sämaschine 10 gemäß Pfeil 14 über das Feld bewegt, so wird die Säscheibe 78 innerhalb des Gehäuses 50 der Austragvorrichtung 24 gemäß Pfeil 150 (siehe Fig. 3) angetrieben. Hierdurch werden die einzelnen Saatgutzellen 132 durch die Saatgutmasse 148 bewegt, bevor sie die Abstreifbürste 92 passieren und in die Austragkammer 90 wandern. Bewegen sich die Saatgutzellen 132 aus der Austragkammer 90 heraus, so passieren die Saatgutzellen wiederum die Abstreifbürste 92, treten in den Sammelbehälter 76 ein und durchfahren die Saatgutmasse 148.

Die einzelnen Rippen 140 wirken dabei auf das Saatgut ein, wenn die Saatgutzellen 132 durch die Saatgutmasse 148 bewegt werden. Dieser Vorgang in Verbindung mit dem Unterdruck an den Öffnungen 136 aus der Vakuumkammer 96 bewirkt die Aufnahme des einzelnen Saatkornes in der Saatgutzelle 132, wenn sich die Saatgutzelle 132 aus der Saatgutmasse 148 nach oben bewegt. Das Saatkorn bleibt in der Saatgutzelle 132, bis die Saatgutzelle 132 die Abstreifbürste 92 passiert und in die Austragkammer 90 eintritt. Da die Austragkammer 90 durch die Säscheibe 78 und das Vakuumdichtelement 98 vom Vakuumdruck abgeschnitten ist, wird durch den in dieser Kammer herrschenden Normaldruck bzw. Atmosphärendruck gewährleistet, daß das Saatgut von der Saatgutzelle 132 gelöst wird und über die Austragvorrichtung 24 nach außen abgegebene wird. Aufgrund der Umfangsgeschwindigkeit der Säscheibe 78 und des nun herrschenden Druckes an der Öffnung 136 der Saatgutzelle 132 wird das einzelne Saatkorn aus der Saatgutzelle 132 im Uhrzeigerdrehsinn herausbewegt (siehe gestrichelte Linie 152 in Fig. 3). Das Herauslösen des Saatkornes aus der Saatgutzelle 132 geschieht dann, wenn beispielsweise das Särad die "3-Hur-Zeiger"-Stellung erreicht hat. Die "3-Uhr-Zeiger"-Stellung bzw. Herauslöse-Stellung des Saatgutes wird mit einer Sävorrichtung gemäß Fig. 1 bis 5 erreicht, da die Auswurfrichtung des Saatgutes aus der Sävorrichtung in etwa mit der Gravitationsfallkurve übereinstimmt. Hierdurch wird ein gleichmäßiger Austrag des Saatgutes in einem großen Geschwindigkeitsbereich der Säscheibe 78 erreicht.

Das generelle vertikale Herauslösen des Saatkornes aus der Saatgutzelle 132 in der Austragkammer 90 führt normalerweise dazu, daß das Saatgut direkt von der Austragvorrichtung 24 auf den Boden fällt. Wird jedoch die Sämaschine 10 gemäß Pfeil 14 auf dem Feld bewegt, so trifft das einzelne Saatkorn unter einem Winkel von 90° auf dem Boden auf, wodurch ein seitliches Hochspringen möglich ist. Ein derartiges Hochspringen des Saatkornes ist jedoch unerwünscht.

Daher ist es besonders vorteilhaft, die horizontale Geschwindigkeitskomponente des Saatkornes etwas zu kompensieren. Dieser horizontale Bewegungsimpuls des Saatkornes wird von der Bewegung der Sämaschine sowie von dem Austrag des Saatgutes aus der Schute beeinflußt. Um ein Aufspringen des Saatgutes in der Saatrille zu vermeiden, ist das Austragrohr 26 mit Bezug auf die Fahrtrichtung der Sämaschine nach hinten abgebogen. Durch die vorteilhafte Anordnung der Sävorrichtung und des zugehörigen Sattrohres wird ein Springen des Saatkornes innerhalb der Zelle vermieden, wenn die Austragvorrichtung 24 das Saatgut entsprechend dosiert abgibt. Das zur Sävorrichtung gehörende Austragrohr 26 ist in den Figuren 6 bis 12 näher veranschaulicht.

Wie aus Fig. 6 hervorgeht, ist das Austragrohr 26 mit Bezug auf die Fahrtrichtung der Sämaschine 10 gemäß Pfeil 14 nach hinten abgebogen. Das Austragrohr 26 weist ein oberes Ende 156 und ein unteres Ende 158 auf. Ein sich an das obere Ende anschließender erster Teil 160 des Austragrohres 26 erstreckt sich nach unten und ist dabei nur geringfügig gekrümmt. Ein zweiter bzw. unterer Teil 162 des Austragrohres 26 erstreckt sich zwischen dem oberen Teil 160 und dem unteren Ende 158.

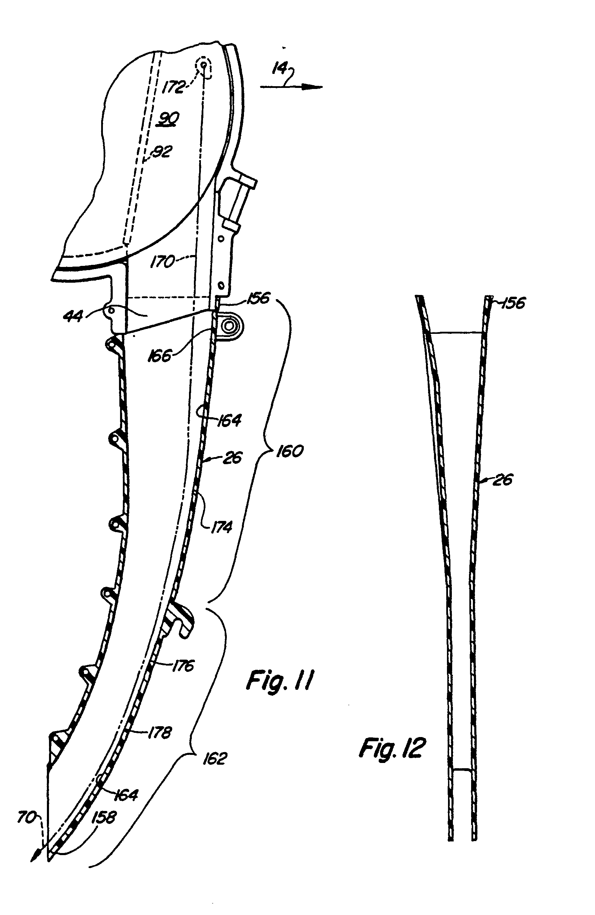

Das Austragrohr 26 ist hohlförmig ausgebildet und weist einen schmalen rechteckförmigen Querschnitt auf. Das Austragrohr geht aus dem ersten Teil 160 allmählich in den gebogenen Teil 162 über, wobei die Vorderwand 164 des Austragrohres über die gesamte Strecke gebogen ist, während die hintere Wand des Austragrohres im unteren Bereich stärker gekrümmt ist als im oberen Bereich, der teilweise geradlinig verläuft (siehe Fig. 11).

Damit das Austragrohr 26, das als einzelnes Ersatzteil ausgebildet ist, ohne weiteres an die Austragschute 44 angeschlossen ist, ist insbesondere das obere Ende des Austragrohres 26 trichterförmig ausgebildet. Durch den abnehmenden Querschnitt wird auch ein Aufspringen des Saatkornes innerhalb der Saatfurche verhindert. Wie insbesondere aus Fig. 6 hervorgeht, nimmt die Stärke des Austragrohres 26 mit Bezug auf die Seitenansicht vom oberen Ende 156 zum unteren Ende 158 allmählich ab. Fig. 7 zeigt die Breite des Austragrohres 26 von der Vorderseite. Hieraus geht hervor, daß das obere Ende 156 die größte Breite aufweist, wobei der obere Teil 160 sich in Richtung des unteren Endes allmählich trichterförmig verjüngt und dann in den rechteckförmig ausgebildeten Teil 162 übergeht, dessen Querschnitt sich in Richtung des unteren Endes 158 nicht mehr verändert. Die Fig. 8 zeigt eine Ansicht entlang der Linie 8—8 gemäß Fig. 6 und die Fig. 10 einen Querschnitt entlang der Linie 10—10 ebenfalls gemäß Fig. 6. Hieraus geht hervor, daß der Querschnitt des oberen Endes des Austragrohres 26 größer ist als der Querschnitt gemäß Fig. 10.

Wie aus Fig. 11 hervorgeht, ist das obere Ende 156 des Austragrohres 26 so angeordnet, daß es in der gleichen Richtung liegt wie die Richtung des austretenden Saatgutes. Wie bereits erwähnt, wird das Saatgut aus der Saatgutzelle 132 an einer Stelle herausbewegt, die durch die "3-Uhr"-Stellung bzw. durch die Position 152 gekennzeichnet ist. Wie aus Fig. 11 hervorgeht, verläuft die Fallrichtung des Saatgutes in vertikaler Richtung. Dalies weist die vordere Wand 164 des oberen Teils 160 im Bereich des oberen Endes 156 einen Teil 166 auf, der in etwa vertikal verlaufend angeordnet ist. Dies Schafft einen Freiraum zwischen dem oberen Ende 156 der vorderen Wand 164 und dem Saatgut, wenn es in den oberen Teil des Austragrohres 26 eintritt. Hierdurch trifft das Saatgut mit einem kleinen Einfallwinkel auf die vordere Wand 164 auf, da die vordere Wand 164 allmählich in eine Krümmung nach hinten übergeht, die sich über den nun folgenden Teil des Austragrohres erstreckt, wobei die Krümmung allmählich zunimmt.

Der erste Teil 160 des Austragrohres 26 verläuft dabei auf einer logarithmischen Kurve. Durch eine derartige Formgebung des Austragrohres mit logarithmischer Krümmung nimmt die Krümmung über die Länge des ersten Teiles 160 allmählich zu, wobei das Austragrohr in den oberen vertikalen Teil 166 auslaufen kann, der an die Austragschute 44 angeschlossen ist.

An der Übergangsstelle zwischen dem ersten Teil 160 und dem zweiten Teil 162 steigt die Krümmung der vorderen Wand 164 kontinuierlich mit Bezug auf die Fahrtrichtung nach hinten an, so daß der sich an den ersten Teil 160 anschließende zweite Teil 162 auf einer Exponentialkurve verläuft.

Die ansteigende Krümmung der vorderen Wand 164 des Austragrohres 26 in Richtung nach unten hat zur Folge, daß der Einfallwinkel bzw. der Auftreffwinkel des Saatkornes 172 auf die Oberfläche der vorderen Wand 164 fortschreitend reduziert wird, so daß das Saatgut nach Zurücklegen eines bestimmten Fallweges an der inneren Oberfläche der vorderen Wand 164 entlanggleitet und dann nicht mehr auf die Wand aufspringt. Es hat sich herausgestellt, daß der Einfallwinkel, mit dem das Saatgut erstmalig auf die vordere Wand 164 des Austragrohres 26 auftrifft, kleiner als 6° ist. Hieraus geht hervor, daß der Winkel wesentlich kleiner ist als der bisher bekannte Auftreffwinkel des Saatgutes bei bekannten Austragrohren für Sävorrichtungen.

Der anfängliche Kontakt des Saatgutes mit der vorderen Wand 164 ist durch den Punkt 174 in Fig. 11 gekennzeichnet. Eine zweite Auftreffstelle des Saatgutes auf die Wand 164 ist durch die Stelle 176 gekennzeichnet, während ein dritte Auftreffstelle des Saatgutes auf die Wand durch die Stelle 178 gekennzeichnet ist. Durch die ansteigende Krümmung der vorderen Wand 164 in Richtung des unteren Endes 158 entlang des Austragrohres 26 vermindert sich jeweils der Einfallwinkel an den einzelnen Stellen 174, 176 und 178. Hieraus ergibt sich, daß an der Stelle 176 der Einfallwinkel des Saatgutes kleiner ist als der Einfallwinkel des Saatgutes an der Stelle 174. Ebenso ist der Einfallwinkel an der Stelle 178 kleiner als an der Stelle 176. An der Stelle 178 kann der Einfallwinkel die Größe 0° erreichen, so daß ab dieser Stelle das Saatgut an der Oberfläche der vorderen Wand 164 zum unteren Ende 158 des Austragrohres 26 entlanggleitet.

Da der größte Anteil des Saatgutes einer Fallinie 170 folgt, wird eine gleichmäßige Ablage des Saatgutes und somit auch ein gleichmäßiger Abstand zwischen den einzelnen Saatkörnern in der Furche gewährleistet. Außerdem wird die horizontale Geschwindigkeitskomponente, die durch die Bewegung der Sämaschine 10 hervorgerufen wird, weitgehend kompensiert. Ein Hin- und Hertanzen des Saatgutes bzw. ein Aufspringen des Saatgutes auf die Wände des Austragrohres wird auf ein Minimum reduziert. Da das einzelne Saatgut mit einer relativ konstanten Geschwindigkeit von der Säscheibe 78 abgegeben wird, wird das Saatgut auch mit einer konstanten Geschwindigkeit aus dem Austragrohr am unteren Ende 158 austreten.

Das das Saatgut im Bereich des unteren Endes ebenfalls an der Oberfläche der vorderen Wand 164 entlanggleitet, bleibt der Austragwinkel des abgegebenen Saatgutes konstant. Hierdurch wird ein gleichmäßiger Abstand zwischen den einzelnen Saatkörnern gewährleistet, wenn diese auf den Boden der Furche auftreffen.

**Patentansprüche**

1. Sämaschine (10), insbesondere Einzelkornsämaschine, mit einer in einem Gehäuse (50) angeordneten Austragvorrichtung (24), an der ein Austragrohr (26) angeschlossen ist, das ein oberes Ende (156) und ein unteres Ende (158) und eine diese beiden Enden (156, 158) miteinander verbindende, eine Vorderwand (164) bildende innere Oberfläche aufweist, die zumindest in ihrem unteren dem Boden zugelegenen Bereich mit Bezug auf die Fahrtrichtung der Sämaschine nach hinten derart gekrümmt verläuft, daß ihre Krümmung fortschreitend bodenwärts zunimmt, dadurch gekennzeichnet, daß die Krümmung in einem sich an das obere Ende (156) anschließenden ersten Teil (160) einer logarithmischen Kurve und in einem zweiten Teil (162), der sich an den ersten Teil (160) anschließt und bis zum unteren Ende (158) führt, einer Exponentialkurve folgt.

2. Sämaschine nach Anspruch 1, dadurch gekennzeichnet, daß der este Teil (160) in seinem sich an das obere Ende (156) anschließenden Bereich im wesentlichen geradlinig ausgebildet ist.

**Revendications**

1. Semoir (10), notamment semoir monograine, comportant un dispositif de déversement (24), qui est disposé dans un carter (50) et auquel est raccordé un tube de déversement (26), qui comporte une extrémité supérieure (156) et une extrémité inférieure (158) et une surface intérieure, qui relie entre elles ces deux extrémités (156, 158), forme une paroi avant (164) et possède, au moins dans sa zone inférieure tournée vers le sol, une forme recourbée vers l'arrière par rapport à la direction de déplacement du semoir, de telle sorte que sa courbure augmente progressivement en direction du sol, caractérisé en ce que la courbure suit une courbe logarithmique dans une première partie (160), qui se raccorde à l'extrémité supérieure (156), et une courbe exponentielle dans une seconde partie (162), qui se raccorde à la première partie (160) et s'étend jusqu'à p'extrémité inférieure (158).

2. Semoir selon la revendication 1, caractérisé en ce que la première partie (160) est réalisée avec une forme sensiblement rectiligne, dans sa zone se raccordant à l'extrémité inférieure (156).

**Claims**

1. Seed drill (10), particularly a single-granule seed drill with, located in a casing (50), a discharge device (24) to which is connected a discharge tube (26), having an upper end (156) and a lower end (158) and an inner surface connecting these two ends (156, 158) and forming a frontal wall (164), said inner surface, at least in its lower region facing the earth relative to the direction of travel of the seed drill, extending in a rearward curved manner, in such a way that its curvature increases progressively in the direction of the soil, characterised in that the curvature in a first portion (160) connecting with the upper end (156) follows a logarithmic curve, and in a second portion (162), which connects with the first portion (160) and leads to the lower end (158), follows an exponential curve.

2. A seed drill according to Claim 1, characterised in that the first portion (160) in its region connecting with the upper end (156), is substantially rectilinear.

Fig. 1

Fig. 2

**Fig. 3**

**Fig. 5**

2

Fig. 4

**Fig. 6**

**Fig. 7**

**Fig. 8**

**Fig. 9**

**Fig. 10**

Fig. 11

Fig. 12